# EUROPÄISCHE PATENTANMELDUNG

(11) **EP 1 139 144 A2**
(43) Veröffentlichungstag der Anmeldung: **04.10.2001**
(21) Anmeldenummer: 01107307.9
(22) Anmeldetag: 23.03.2001
(51) Int. Cl.: G02B 27/18

(54) **Kurzfilm-Projektor**

(30) Priorität: 29.03.2000 DE 10015439
(71) Anmelder: Maass, Uwe, 50996 Köln (DE)
(72) Erfinder: Maass, Uwe, 50996 Köln (DE)
(74) Vertreter: LENZING GERBER

(57) **Zusammenfassung**

Die Erfindung betrifft eine Vorrichtung zur Darstellung einer Anzahl von N Bildern B_{1..j..N}, wobei jedes Bild B_{1..j..N} in eine Anzahl von Z zeilenförmigen Bildausschnitten BA_{1..j..N,1..i..Z} zerteilt ist und die Bildausschnitte BA_{j,i} mit dem gleichen Index i jeweils parallel zueinander auf einem Bildträger (T) in Gruppen G_{1..i..Z} angeordnet sind und die Gruppen G_{1..i..Z} in der Reihenfolge des Index i nebeneinander angeordnet sind, wobei jeder Gruppe G_{1..i..Z} ein längliches optisches Element E_{1..i..Z} zugeordnet ist, wobei ein Antrieb Bildträger (T) und Elemente E_{1..i..Z} quer zur Längserstreckung der Bildausschnitte BA_{1..j..N,1..i..Z} relativ zueinander bewegt.

## Beschreibung

Die vorliegende Erfindung betrifft eine Vorrichtung zur Darstellung einer Anzahl von N Bildern B_{1..j..N}, wobei jedes Bild B_{1..j..N} in eine Anzahl von Z zeilenförmigen Bildausschnitten BA_{1..j..N,1..i..Z} zerteilt ist und die Bildausschnitte BA_{j,i} mit dem gleichen Index i jeweils parallel zueinander auf einem Bildträger (T) in Gruppen G_{1..i..Z} angeordnet sind und die Gruppen G_{1..i..Z} in der Reihenfolge des Index i nebeneinander angeordnet sind, wobei jeder Gruppe G_{1..i..Z} ein längliches optisches Element E_{1..i..Z} zugeordnet ist.

Derartige Vorrichtungen sind als kleine Karten bekannt, welche vom Betrachter in der Hand gehalten werden und die durch Bewegen nacheinander verschiedene Bilder bzw. Bilderfolgen in Form von sehr kurzen Filmen anzeigen. Durch die Bewegung der Karten ändert sich der Betrachtungswinkel, mit dem der Betrachter auf die Kartenoberfläche schaut. Die optischen Elemente in Form von Linsen, welche in eine fest mit den Bildern bzw. dem Bildträger verbundene, meist verklebte Kunststoffschicht eingearbeitet sind, lenken die Lichtstrahlen derart um, daß von jedem Betrachtungswinkel lediglich ein Bild bzw. der Bildübergang zweier benachbarter Bilder vom Betrachter zu sehen ist. Aufgrund der Tatsache, daß diese Karten Billigprodukte sind, sind nur relativ wenige Bilder bzw. nur kurze Bilderfolgen von 5 bis 10 Bildern darstellbar. Da es sich ferner um tragbare Karten von kleinem Format handelt und diese nur aus der Hand betrachtbar sind, ist deren Qualität in der Regel schlecht. Aufgrund ihrer bescheidenen Größe und Qualität werden sie heute nur selten für Werbezwecke verwendet.

Aufgabe der vorliegenden Erfindung ist es, das Prinzip der Karten zu einer Vorrichtung derart weiter zu entwickeln, daß diese Vorrichtung unabhängig von der Einwirkung des Betrachters mehrere Bilder nacheinander darstellt.

Diese Aufgabe wird erfindungsgemäß durch eine Vorrichtung mit den Merkmalen des Anspruch 1 gelöst. Weitere vorteilhafte Ausgestaltungen der Vorrichtung ergeben sich durch die Merkmale der Unteransprüche.

Durch die vorteilhafte Trennung zwischen Bildträger und optischen Elementen ist es möglich, diese mittels eines Antriebs relativ zueinander zu bewegen. Hierdurch ist es nicht erforderlich, daß der Betrachter die Vorrichtung selbst verschwenkt bzw. seinen Betrachtungspunkt bzw. Blickwinkel zur Vorrichtung ändert. Die Vorrichtung selbst kann sehr groß von ihren Dimensionen gestaltet werden, da sie der Betrachter selbst nicht mehr in der Hand halten muß. Somit ist es möglich, große Anzeigeflächen herzustellen, die zum Beispiel als Plakatwände verwendbar sind.

Die Form und Art der optischen Elemente, sowie deren Abstand zum Bildträger ist prinzipiell frei wählbar, nur muß gewährleistet sein, daß von verschiedenen Betrachtungspunkten aus jeweils immer nur ein Bild bzw. Bildübergang vom Betrachter zu sehen ist. Dies kann durch die im Stand der Technik bekannten zeilenförmigen Linsensysteme erfolgen. Es ist jedoch auch möglich, entsprechende Lichtleiter zu verwenden, die jeweils nur die Betrachtung der Bildausschnitte eines bestimmten Bildes ermöglichen. Es ist auch vorstellbar, die optischen Elemente als zeilenförmigen Lupen auszubilden, so daß die zeilenförmigen Bildausschnitte auf die Breite des jeweiligen optischen Elements vergrößert werden, und somit die optischen Elemente die Betrachtung der Bilder vorteilhaft nicht stören.

Entweder werden die Elemente oder aber der Bildträger quer zur Längserstreckung der Bildausschnitte bewegt, so daß eine Relativbewegung zwischen Bildträger und Elementen entsteht. Diese Relativbewegung kann zum Beispiel vorteilhaft mittels eines Nockenantriebs erfolgen, so daß Bildträger oder optische Elemente zwischen zwei Positionen hin- und herbewegt werden. Es ist jedoch auch denkbar, die Bewegung des Bildträgers oder der optischen Elemente mittels eines geraden sich parallel zu den Bildausschnitten erstreckenden Schlitzes zu realisieren, wobei in den Schlitz ein um eine Achse rotierender Stift eingreift und durch die Rotation Bildträger oder optische Elemente quer zur Längserstreckung der Bildausschnitte bewegt werden.

Sofern keine Filme dargestellt werden, sondern die auf dem Bildträger vorhandenen Einzelbilder einzeln über einen längeren Zeitraum dargestellt werden sollen, ist es möglich, die Relativbewegung zur Darstellung eines Bildes zu stoppen. Durch die Länge des Intervalls, in der keine Relativbewegung erfolgt, kann die Zeitdauer bestimmt werden, in der der Betrachter ein bestimmtes Bild vom Bildträger betrachten kann. Somit ist es möglich, Plakatwände zu realisieren, welche mehrere Bilder anzeigen können, wobei durch die relativ kleinen Relativbewegungen, welche durchzuführen sind, um ein benachbartes Bild mittels der Vorrichtung darzustellen, die Zeiten zwischen der Darstellung (Wechsel) einzelner Bilder relativ kurz sind. Dies ist besonders vorteilhaft, da bei heutigen Plakatanzeigevorrichtungen, die mehrere Plakate (Darstellungen) nacheinander anzeigen, die Zeit für das Wechseln der Anzeige in der Regel relativ lang ist.

Um sehr viele Bilder mittels der erfindungsgemäßen Vorrichtung darzustellen, ist es vorteilhaft möglich, den Bildträger aus einem insbesondere flexiblen Material herzustellen, wobei dieser auf Vorratsspulen mit seinen Enden aufwickelbar bzw. abwickelbar ist, so daß nacheinander ineinander verschachtelte Gruppen von Bildern hinter die Optik bewegbar bzw. verfahrbar sind. Es ist auch denkbar, daß der Bildträger als Endlosband ausgebildet ist, wobei dann mehrere ineinander verschachtelte Bilder in gruppenweise auf dem Bildträger nebeneinander angeordnet sind und mittels eines Antriebs jeweils eine der Gruppen durch Verdrehen der Wellen hinter die optische Elemente bringbar ist. Bei den beiden zuletzt genannten Ausführungsformen sollten vorteilhaft Markierungen auf dem Bildträger vorhanden sein, damit eine Feinjustierung durchgeführt werden kann, so daß stets mittels der Vorrichtung die richtigen Bilder zur richtigen Zeit bzw. für die richtige Zeitdauer anzeigbar sind.

Um eine Anzeige auch bei Dunkelheit oder schlechten Sichtverhältnissen zu gewährleisten, ist es vorteilhaft, wenn Beleuchtungsmittel vorgesehen sind, die den Bildträger beleuchten. Die Beleuchtung kann dabei durch die optischen Elemente erfolgen. Es ist jedoch auch denkbar, daß die Beleuchtungsmittel den Zwischenraum zwischen optischen Elemente und Bildträger beleuchten. Sofern der Bildträger selbst lichtdurchlässig ist, ist es auch möglich, die Beleuchtungsmittel hinter dem Bildträger anzuordnen. Die Art und Weise, wie die Beleuchtungsmittel angeordnet sind, ist jeweils davon abhängig, wie die Vorrichtung selbst auszugestalten ist.

Nachfolgend werden anhand von Zeichnungen verschiedene mögliche Ausgestaltungen der erfindungsgemäßen Vorrichtung näher erläutert.

Es zeigen:
- Fig. 1: den prinzipiellen Aufbau einer erfindungsgemäßen Vorrichtung;
- Fig. 2: eine Querschnittsdarstellung durch einen Ausschnitt der erfindungsgemäßen Vorrichtung;
- Fig. 3: eine erfindungsgemäße Vorrichtung, bei der die optischen Elemente mittels eines Nockenantriebs relativ zum Bildträger bewegt werden;
- Fig. 4: eine weitere Ausführungsform, bei der mittels eines Nockenantriebs der Bildträger relativ zu den feststehenden optischen Elementen hin- und herbewegt wird;
- Fig. 5: eine weitere Ausgestaltung der erfindungsgemäßen Vorrichtung, bei der der Bildträger als Endlosband ausgestaltet ist; ein nicht dargestellter Antrieb, bewegt das um zwei Walzen herumlaufende Endlosband, wobei die Relativbewegung zwischen Bildträger und optischen Elementen mittels der angetriebenen Walzen erfolgt;
- Fig. 6: eine weitere mögliche Ausführungsform der erfindungsgemäßen Vorrichtung, wobei der Bildträger als Endlosband ausgebildet ist, welches um zwei Walzen herumgeführt ist, wobei die Relativbewegung zwischen zwei optischen Elementen und Bildträger mittels eines Nockenantriebs, welcher die optischen Elemente antreibt, erfolgt;
- Fig. 7: eine weitere mögliche Ausführungsform der erfindungsgemäßen Vorrichtung, wobei der Bildträger als ein Band ausgebildet ist, dessen Enden an Walzen befestigt sind, die als Aufwickel bzw. Abwickelspulen dienen, wobei die Relativbewegung zwischen optischen Elementen und Bildträger mittels eines Nockenantriebs der optischen Elemente erfolgt.

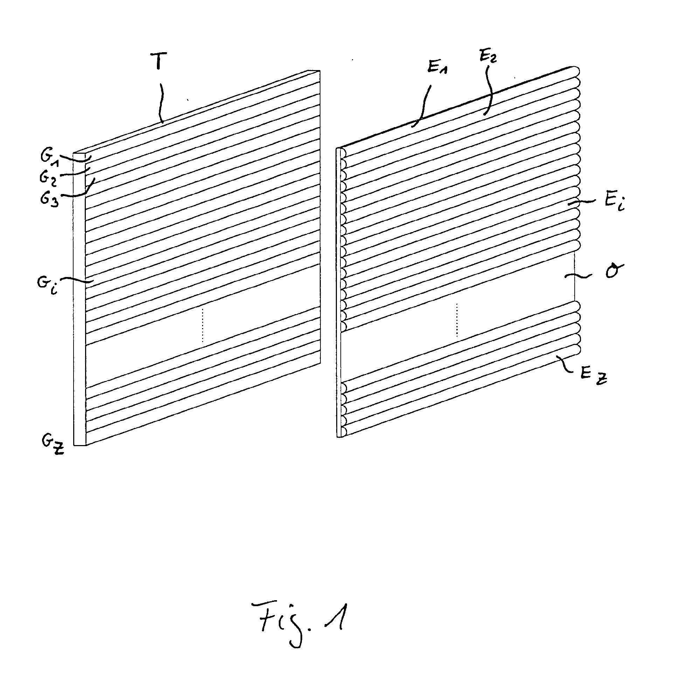

Die Fig. 1 zeigt einen prinzipiellen Aufbau der erfindungsgemäßen Vorrichtung, wobei auf einem Bildträger T Gruppen G_{1..i..Z} parallel nebeneinander angeordnet sind. Jeder Gruppe G ist ein zeilenförmiges optisches Element E_{1..i..Z} zugeordnet. Die optischen Elemente E_{1..i..Z} bilden zusammen die Optik O.

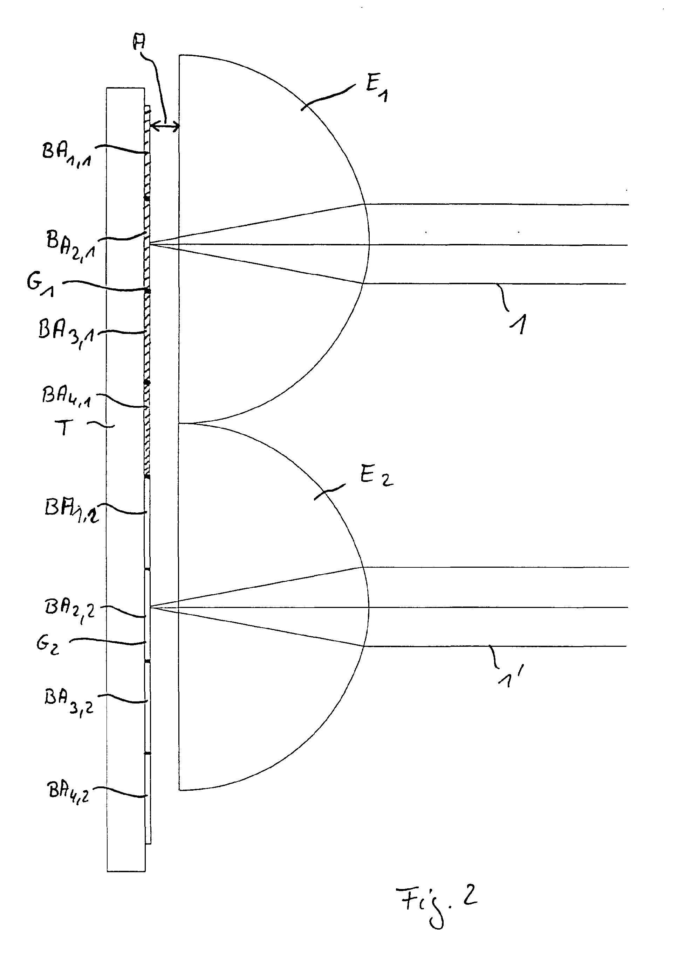

Wie in Fig. 2 dargestellt, besteht jede Gruppe G_{1..i..Z} aus mehreren parallel zueinander angeordneten Bildausschnitten BA. Jede Gruppe G₁ bzw. G₂ besteht aus jeweils vier Bildausschnitten BA. Der Bildausschnitt BA_{1,1} sowie der Bildausschnitt BA_{1,2} sind Ausschnitte ein und desselben Bildes. Legt man die Bildausschnitte BA_{1,1..i..Z} nebeneinander, so erhält man das Bild B₁. Das optische Elemente E₁ dient zur Auswahl eines Bildausschnittes BA der Gruppe G₁. Wie in Fig. 2 dargestellt, bündelt das Bildelement E₁ die senkrecht auf die Vorrichtung einfallenden Strahlen 1 auf den Bildausschnitt BA_{2,1}. Entsprechend werden die Lichtstrahlen 1' vom optischen Element E₂ gebündelt, so daß der Betrachter lediglich den Bildausschnitt BA_{2,2} sieht. Durch die Relativbewegung zwischen den optische Elementen E₁ und E₂ zu dem Bildträger T werden die einfallenden bzw. ausfallenden Lichtstrahlen auf jeweils nur die Bildausschnitte BA fokussiert, welche zu ein und demselben Bild gehören. Je nach Auflösung der auf dem Bildträger aufgebrachten Bildausschnitte und der Art der Optik ist es möglich, mehr als vier Bilder ineinander zu verschachteln.

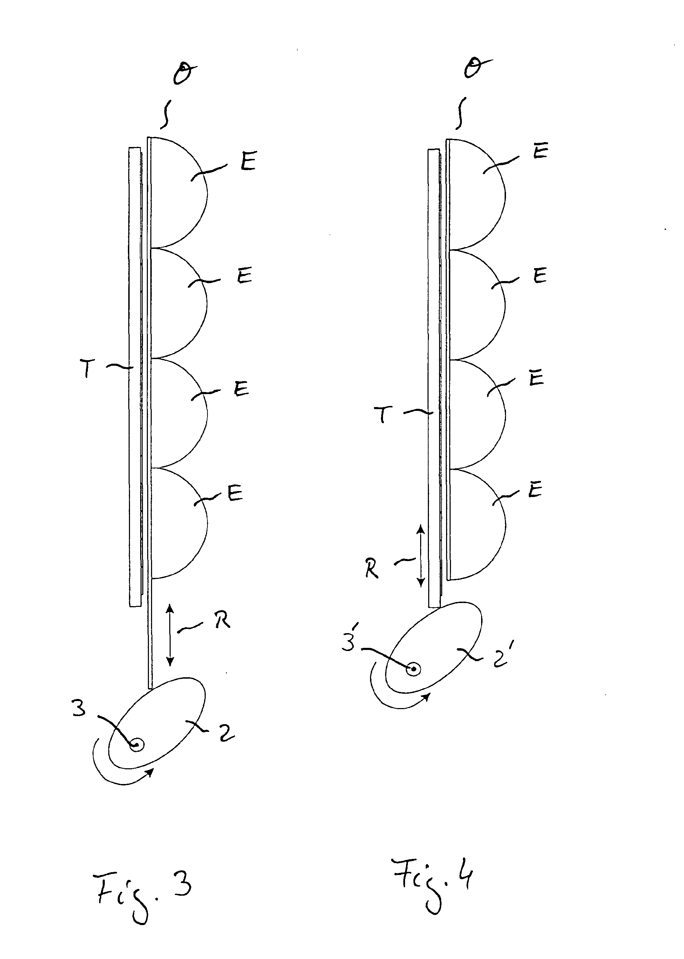

Die Fig. 3 zeigt eine mögliche Ausführungsform mit der erfindungsgemäßen Vorrichtung, bei der der Bildträger T relativ zu der Achse 3 des Nockenantriebs 2 fest angeordnet ist. Durch Verdrehen des Nockens 2 werden die Bildelemente E bzw. die Optik O auf- und ab entsprechend der Bewegungsrichtung R. Hierdurch werden verschiedene Bilder nacheinander dargestellt.

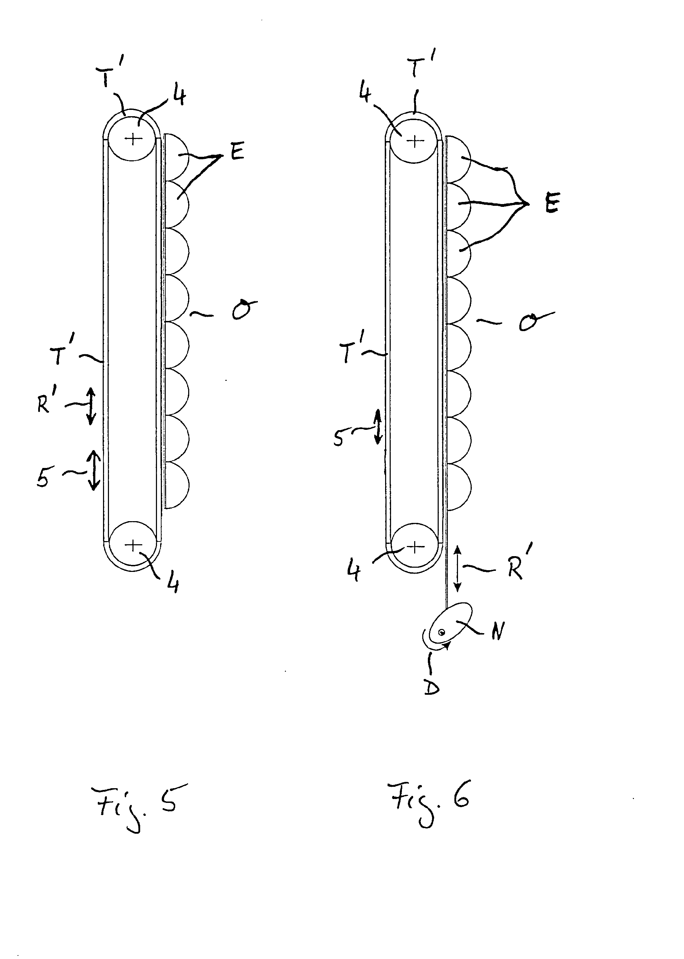

Die Fig. 4 zeigt eine Ausführungsform, bei der die Optik O relativ zu dem Nockenantrieb 3', 2' starr angeordnet ist und der Nockenantrieb den Bildträger T in Pfeilrichtung R auf- und ab bewegt.

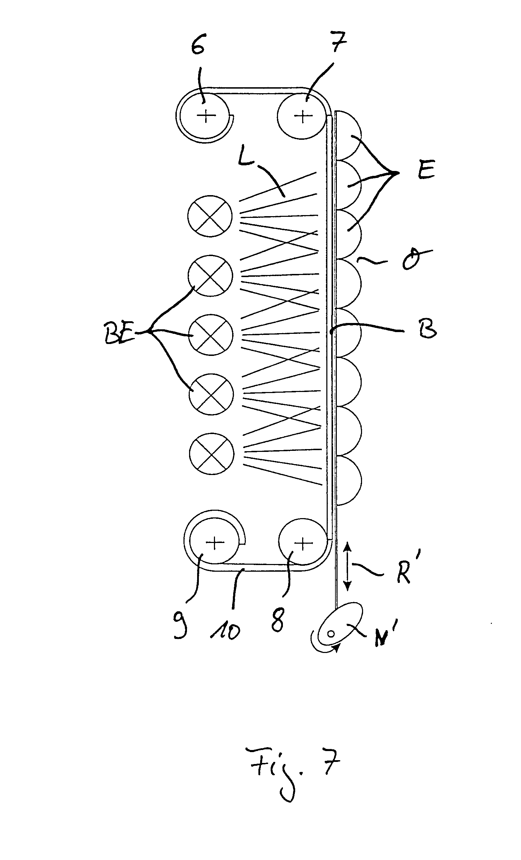

Die Fig. 5 und 6 zeigen weitere Ausführungsformen der erfindungsgemäßen Vorrichtung, bei denen der Bildträger T' als Endlosband ausgebildet ist, welches um Walzen 4 herumgeführt ist. Durch Antrieb einer oder beider Walzen 4 wird der Bildträger T' relativ zu den optischen Elementen E bewegt. Es ist möglich, auf dem Bildträger T' mehrere ineinander verschachtelte Bilderreihen anzuordnen, wobei wahlweise eine der Bilderreihen hinter die Optik O verfahrbar ist. Wie in Fig. 5 dargestellt, wird die Relativbewegung zwischen der Optik O und dem Bildträger T' mittels des Antriebs für die Walzen 4 erzeugt. Dies ist mit dem Pfeil R' angedeutet.

Bei der Ausführungsform gemäß der Fig. 6 wird die Relativbewegung R' mittels eines zusätzlichen Nockenantriebs D,N erzeugt.

Die Fig. 7 zeigt eine weitere Ausführungsform der erfindungsgemäßen Vorrichtung, bei der der Bildträger 10 aus einem flexiblen Material und als Band ausgebildet ist. Auf dem Bildträger 10 sind mehrere ineinander verschachtelte Bilderreihen nebeneinander angeordnet, so daß durch Antrieb der Walzen 6,9 wahlweise bestimmte Bilderreihen hinter die Optik O bzw. die optischen Elemente E verfahrbar sind. Die Umlenkwalzen 7,8 garantieren, daß der Bildträger 10 stets im gleichen Abstand zu den optischen Elementen E ist. Der Bildträger 10 ist, sofern Beleuchtungsmittel BE vorgesehen sind, aus einem durchscheinenden Material. Die Beleuchtungsmittel BE beleuchten den Bildträger 10 von hinten mit ihren Lichtstrahlen L, so daß sich ein größerer Kontrast und Helligkeit der Anzeigevorrichtung ergibt. Die Relativbewegung zwischen Optik O und Bildträger 10 kann entweder über einen Antrieb der Walzen 6,9 erfolgen oder über einen Nockenantrieb N'.

Aufgrund der Tatsache, daß die Gehäuseform und die Abmessungen der erfindungsgemäßen Vorrichtung beliebig wählbar und gestaltbar sind, sind die Gehäuse der Vorrichtungen der Fig. 1 bis 7 nicht dargestellt.

Es ist denkbar, daß die Vorrichtung einen Steuerrechner aufweist, der die zeitlichen Abläufe der Bewegungen des Bildträgers sowie die Relativbewegung zwischen Optik und Bildträger steuert. Es ist zudem denkbar, daß die Vorrichtung Kommunikationsmittel aufweist, so daß sie von der Ferne aus steuer- und wartbar ist. Insbesondere kann auch die Beleuchtung je nach Lichteinfall oder Helligkeit (Dämmerung, Sonnenaufgang) von der Steuereinrichtung ein- und ausgeschaltet werden oder die Helligkeit entsprechend eingestellt werden.

## Patentansprüche

1. Vorrichtung zur Darstellung einer Anzahl von N Bildern B_{1..j..N}, wobei jedes Bild B_{1..j..N} in eine Anzahl von Z zeilenförmigen Bildausschnitten BA_{1..j..N,1..i..Z} zerteilt ist und die Bildausschnitte BA_{j,i} mit dem gleichen Index i jeweils parallel zueinander auf einem Bildträger (T) in Gruppen G_{1..i..Z} angeordnet sind und die Gruppen G_{1..i..Z} in der Reihenfolge des Index i nebeneinander angeordnet sind, wobei jeder Gruppe G_{1..i..Z} ein längliches optisches Element E_{1..i..Z} zugeordnet ist, **dadurch gekennzeichnet, daß** ein Antrieb Bildträger (T) und Elemente E_{1..i..Z} quer zur Längserstreckung der Bildausschnitte BA_{1..j..N,1..i..Z} relativ zueinander bewegt.

2. Vorrichtung nach Anspruch 1, **dadurch gekennzeichnet, daß** die optischen Elemente Linsen, Linsensysteme und/oder Schlitze sind.

3. Vorrichtung nach Anspruch 1 oder 2, **dadurch gekennzeichnet, daß** der Antrieb die Relativbewegung insbesondere zwischen zwei Endstellungen in mindestens einer Zwischenstellung unterbricht, wobei jeweils in einer Zwischenstellung ein bestimmtes Bild von der Vorrichtung dargestellt wird.

4. Vorrichtung nach Anspruch 3, **dadurch gekennzeichnet, daß** die Unterbrechung der Relativbewegung jeweils für eine definierte Zeitspanne erfolgt.

5. Vorrichtung nach Anspruch 4, **dadurch gekennzeichnet, daß** jedem Bild eine eigene Zeitspanne zugeordnet ist, für die die Relativbewegung unterbrochen wird, sobald das jeweilige Bild dargestellt wird.

6. Vorrichtung nach Anspruch 3, **dadurch gekennzeichnet, daß** die Unterbrechung der Relativbewegung jeweils für ein per Zufallsgenerator bestimmtes Zeitintervall erfolgt.

7. Vorrichtung nach einem der vorherigen Ansprüche, **dadurch gekennzeichnet, daß** der Bildträger fest angeordnet ist und der Antrieb die Elemente bewegt.

8. Vorrichtung nach einem der. Ansprüche 1 bis 6, **dadurch gekennzeichnet, daß** Elemente fest angeordnet sind und der Antrieb den Bildträger bewegt.

9. Vorrichtung nach einem der vorherigen Ansprüche, **dadurch gekennzeichnet, daß** mehrere ineinander verschachtelte Bilderfolgen auf einem gemeinsamen Bildträger angeordnet sind, wobei mittels eines gesonderten Antriebs oder des Antriebs für die Relativbewegung wahlweise oder nacheinander jeweils eine Bilderfolge hinter die optischen Elemente bewegbar sind.

10. Vorrichtung nach Anspruch 9, **dadurch gekennzeichnet, daß** der Bildträger aus einem flexiblem Material ist.

11. Vorrichtung nach einem der Ansprüche 9 oder 10, **dadurch gekennzeichnet, daß** der Bildträger als Endlosband ausgebildet ist, welches um zwei Rollen gespannt ist, welche mittels eines Antriebs verdrehbar sind, wobei mittels des Antriebs wahlweise eine der Bildfolgen hinter die optischen Elemente bewegbar ist.

12. Vorrichtung nach einem der Ansprüche 9 oder 10, **dadurch gekennzeichnet, daß** der Bildträger mit jeweils einem Ende an einer Rolle befestigt ist, wobei die Rollen mittels eines Antriebs verdrehbar sind, derart, **daß** wahlweise eine der beiden Rollen als Aufwickelspule fungiert, derart, **daß** wobei mittels des Antriebs wahlweise eine der Bildfolgen hinter die optischen Elemente bewegbar ist.

13. Vorrichtung nach einem der vorherigen Ansprüche, **dadurch gekennzeichnet, daß** Bildträger oder optischen Elemente verschieblich gelagert sind, wobei ein Nockenantrieb die Relativbewegung erzeugt, indem er entweder den Bildträger oder die optischen Elemente bewegt.

14. Vorrichtung nach einem der vorherigen Ansprüche 3 bis 13, **dadurch gekennzeichnet, daß** die maximale Relativbewegung in einer Richtung gleich der Breite von z minus einem (z-1) Bildausschnitten BA ist.

15. Vorrichtung nach einem der vorherigen Ansprüche, **dadurch gekennzeichnet, daß** mindestens eine Beleuchtungsquelle den Bildträger beleuchtet.

16. Vorrichtung nach einem der vorherigen Ansprüche, **dadurch gekennzeichnet, daß** der Bildträger für Lichtstrahlen durchlässig ist, wobei mindestens eine Beleuchtungsmittel den Bildträger von hinten anstrahlt.

17. Verwendung der Vorrichtung nach einem der vorherigen Ansprüche, **dadurch gekennzeichnet, daß** die Vorrichtung als Großprojektor, insbesondere als Plakatwand zu Darstellung von Kurzfilmen und/oder mehrerer Einzelbilder ausgebildet ist.
